# EUROPÄISCHE PATENTSCHRIFT

(11) **EP 1 966 103 B1**
(45) Veröffentlichungstag und Bekanntmachung des Hinweises auf die Patenterteilung: **31.07.2013**
(21) Anmeldenummer: 06829718.3
(22) Anmeldetag: 18.12.2006
(51) Int. Cl.: C04B 24/30, C08J 3/12, C08K 3/22, C08K 3/36, C08L 61/14, C04B 103/30

(54) **PULVERFÖRMIGE POLYKONDENSATIONSPRODUKTE**
PULVERULENT POLYCONDENSATION PRODUCTS
PRODUITS DE POLYCONDENSATION PULVERULENTS

(30) Priorität: 20.12.2005 DE 102005060947
(43) Veröffentlichungstag der Anmeldung: 10.09.2008
(73) Patentinhaber: Construction Research & Technology GmbH, 83308 Trostberg (DE)
(72) Erfinder: WIELAND, Philipp, 80935 München (DE); KRAUS, Alexander, 83552 Evenhausen (DE); ALBRECHT, Gerhard, 83209 Prien a. Ch. (DE); GRASSL, Harald, 83471 Schönau (DE); BECHER, Kerstin, 83530 Waldhausen (DE)
(74) Vertreter: Dey, Michael
(86) Internationale Anmeldenummer: PCT/EP2006/012197
(87) Internationale Veröffentlichungsnummer: WO 2007/071361

(56) Entgegenhaltungen:
- EP-A1- 0 221 301
- EP-A1- 0 780 348
- WO-A1-2006/042709
- DE-A1- 19 946 591
- GB-A- 1 391 358
- US-A1- 3 658 751

## Beschreibung

Die vorliegende Erfindung betrifft ein pulverförmiges Polykondensationsprodukt auf Basis von aromatischen oder heteroaromatischen Verbindungen, Verfahren zu seiner Herstellung sowie dessen Verwendung als Zusatzmittel für Baustoffmischungen.

In wässrigen Suspensionen von pulverförmigen anorganischen oder organischen Substanzen, wie hydraulischen Bindemitteln (z.B. Zement, Kalk, Gips oder Anhydrit), Gesteinsmehl, Silikatmehl, Kreide, Tonen, Porzellanschlicker, Talkum, Pigmenten, Ruß oder Kunststoffpulvern, werden oft Zusatzmittel in Form von Dispergiermitteln zugesetzt, um ihre Verarbeitbarkeit, d.h. Knetbarkeit, Fließfähigkeit, Spritzbarkeit, Streichfähigkeit oder Pumpbarkeit zu verbessern. Diese Zusatzmittel sind in der Lage, durch Adsorption an die Oberfläche der Teilchen Agglomerate aufzubrechen und die gebildeten Teilchen zu dispergieren. Dies führt insbesondere bei hochkonzentrierten Dispersionen zu einer deutlichen Verbesserung der Verarbeitbarkeit.

Bei der Herstellung von Baustoffmischungen, die hydraulische Bindemittel wie Zement, Kalk, Gips oder Anhydrit enthalten, lässt sich dieser Effekt besonders vorteilhaft nutzen, da zur Erzielung einer gut verarbeitbaren Konsistenz ansonsten wesentlich mehr Wasser benötigt würde, als für den nachfolgenden Hydratationsprozess erforderlich wäre. Durch das nach dem Erhärten allmählich verdunstende Wasser bleiben Hohlräume zurück, welche die mechanischen Festigkeiten und Beständigkeiten der Baukörper signifikant verschlechtern.

Um den im Sinne der Hydratation überschüssigen Wasseranteil zu reduzieren und/oder die Verarbeitbarkeit bei einem vorgegebenen Wasser/Bindemittel-Verhältnis zu optimieren, werden Zusatzmittel eingesetzt, die im allgemeinen als Wasserreduktions- oder Fließmittel bezeichnet werden.

Beispiele für bisher hauptsächlich verwendete Zement-Dispergiermittel, bzw. Fließmittel sind Salze von Naphthalinsulfonsäure/Formaldehyd-Kondensaten (vgl. EP-A 214 412, im Folgen als Naphthalinsulfonate bezeichnet), Salze von Melaminsulfonsäure/Formaldehyd-Kondensaten (vgl. DE-PS 16 71 017, im Folgenden als Melaminsulfonate bezeichnet), sowie Salze von Polycarbonsäuren (vgl. US 5,707,445 B1, EP 1 110 981 A2, EP 1 142 847 A2, im Folgenden als Polycarboxylate bezeichnet). Solche Polycarboxylate werden meist durch radikalische Copolymerisation von ethylenisch ungesättigten Carbonsäuren (wie z.B. Acrylsäure, Methacrylsäure oder Maleinsäure bzw. deren Salze) und Poly(alkylenoxiden) mit einer polymerisierbaren Endgruppe (wie z.B. Methacrylate, Allylether oder Vinylether) hergestellt. Diese Herstellungsweise führt zu Polymeren mit einer kammartigen Struktur.

Jedes der genannten Dispergiermittel hat spezifische Vorteile, gleichwohl aber auch individuelle Nachteile. So zeigen etwa Polycarboxylate eine deutliche Verzögerung der Erstarrungszeiten des Betons bei gleichzeitig exzellenter Verflüssigungswirkung. Auf der anderen Seite zeigen Naphthalinsulfonate und Melaminsulfonate eine gute Verflüssigung und die Festigkeitsentwicklung wird durch den Zusatz dieser Stoffe kaum beeinträchtigt. Jedoch weisen diese Verflüssiger das Problem des sog. "slump loss" auf, d.h. dass die verflüssigende Wirkung selbst bei vergleichsweise hohen Dosierungen nur über eine relativ kurze Zeitspanne bestehen bleibt. Dies führt insbesondere dann zu Problemen, wenn zwischen der Herstellung des Betons und dessen Einbau größere Zeitspannen liegen, wie sie sich oft durch lange Transport- oder Förderwege ergeben.

Aus verschiedenen Studien über den Wirkungsmechanismus von Fließmitteln ist bekannt, dass die Wirksamkeit der verwendeten Moleküle auf zwei unterschiedlichen Effekten beruht. Zum einen adsorbieren die negativ geladenen Säuregruppen der Fließmittel auf der durch Calciumionen positiv geladenen Zementkornoberfläche. Die so entstehende elektrostatische Doppelschicht (Zeta Potential) führt zu einer elektrostatischen Abstoßung zwischen den Partikeln, die jedoch relativ schwach ist. Im Fall der oben erwähnten Kammpolymere wird diese elektrostatische Abstoßung durch den sterischen Anspruch der wasserlöslichen, nicht adsorbierenden Poly (alkylenoxid)e zusätzlich verstärkt. Diese sterische Abstoßung ist sehr viel stärker, als die elektrostatische, so dass leicht zu erklären ist, warum die Verflüssigungswirkung der Polycarboxylate sehr viel stärker ist, als die der Naphthalin- oder Melaminsulfonate, d.h. um eine vergleichbare Verflüssigung zu erzielen, kann das Polycarboxylat deutlich niedriger dosiert werden.

Ein Nachteil der Polycarboxylate ist, dass für deren Herstellung Poly (alkylenoxid)e nötig sind, die in einem extra Reaktionsschritt mit einer polymerisierbaren Gruppe funktionalisiert werden müssen. Der Preis der Herstellung dieser Verflüssiger liegt aus diesem Grund weit über dem von Naphthalin- oder Melaminsulfonaten, womit der immer noch sehr hohe Verbrauch solcher Verflüssiger zu erklären ist.

Ein Polykondensationsprodukt, das neben Säure-Haftgruppen auch nicht adsorbierende Seitenketten enthält, wird in US 5,750,634 beschrieben, wobei die Seitenketten durch eine Copolykondensation von Melaminsulfonsäuren, Formaldehyd und Aminogruppen- haltigen Polyalkylenoxiden in das Produkt eingebaut werden. Der Nachteil dieses Verfahrens ist jedoch einerseits der hohe Preis aminofunktionalisierter Polyalkylenoxide, andererseits werden bei diesem Verfahren keine hohen Polymerisationsgrade erzielt, was die Wirksamkeit der erhaltenen Polymere im Vergleich zu den oben genannten Polycarboxylaten negativ beeinflusst. Ein weiteres Beispiel für ein solches Polykondensationsprodukt mit nicht adsorbierenden Seitenketten wird in EP 0 780 348 A1 beschrieben. Darin wird ethoxyliertes Phenol mit Hydroxybenzoesäuren in Gegenwart von Formaldehyd einer Polykondensation unterworfen. Die dort beschriebenen Reaktionszeiten von 10 bis 12 h sind jedoch für eine ökonomisch sinnvolle technische Realisierung wenig geeignet. Außerdem sind Hydroxybenzoesäuren relativ teuer und aufgrund ihrer pulverförmigen Konsistenz im technischen Maßstab wesentlich schlechter zu dosieren als beispielsweise Flüssigkeiten.

In der deutschen Patentanmeldung DE 10 2004 050 395.8 werden Polykondensationsprodukte auf Basis einer aromatischen oder heteroaromatischen Verbindung (A) mit 5 bis 10 C-Atomen bzw. Heteroatomen mit mindestens einem Oxyethylen- oder Oxypropylen-Rest und einem Aldehyd (C) ausgewählt aus der Gruppe Formaldehyd, Glyoxylsäure und Benzaldehyd oder Mischungen davon beschrieben, welche eine mit kammartigen Polycarboxylaten vergleichbare verflüssigende Wirkung von anorganischen Bindemittel-Suspensionen bewirkt und diesen Effekt über einen längeren Zeitraum aufrechterhalten ("slump Erhalt"). Im Vergleich zu Kondensationsprodukten auf Basis von Naphthalinsulfaten oder Melaminsulfonaten weisen diese Kondensationsprodukte eine wesentlich bessere Verflüssigungswirkung bei gleichzeitig geringerer Dosierung auf.

Nachteilig bei diesen Kondensationsprodukten ist lediglich die Tatsache, dass die entsprechenden Polykondensationsprodukte in Form von wässrigen Lösungen mit einem Festgehalt von ca. 30 Gew.-% anfallen, zu deren Lagerung insbesondere in warmen Klimazonen besondere Maßnahmen zu deren Stabilisierung notwendig sind.

Der vorliegenden Erfindung lag daher die Aufgabe zugrunde, entsprechende Polykondensationsprodukte bereitzustellen, welche die genannten Nachteile entsprechend dem Stand der Technik nicht aufweisen, sondern eine ausgezeichnete Verflüssigungswirkung in Baustoffmischungen und gleichzeitig eine ausgezeichnete Lagerstabilität aufweisen.

Diese Aufgabe wurde erfindungsgemäß durch die Bereitstellung von pulverförmigen Polykondensationsprodukten gelöst, wie sie in den Ansprüchen definiert sind.

Es hat sich nämlich überraschenderweise gezeigt, dass die Herstellung dieser pulverförmigen Polykondensationsprodukte auch ohne Neutralisation der wässrigen Lösungen erfolgen kann, weshalb auch kein unter Umständen störendes Natriumsulfat gebildet wird, welches gegebenenfalls relativ aufwendig wieder entfernt werden muss.

Außerdem lassen sich die erfindungsgemäß vorgeschlagenen Polykondensationsprodukte in technisch sehr einfacher Weise erstellen, was ebenfalls nicht vorhersehbar war.

Das zur Herstellung der erfindungsgemäßen pulverförmigen Produkte verwendete Kondensationsprodukt besteht aus maximal drei Komponenten A), B) und C, wobei in manchen Fällen auch auf den Einsatz von Komponente B) verzichtet werden kann. Die Komponente A) ist eine aromatische oder heteroaromatische Verbindung mit 5 bis 10 C-Atomen, wobei diese Verbindung im Durchschnitt 1 bis 300 mol eines Restes aus der Gruppe Oxyethylen [-CH2-,CH₂-O-] und Oxypropylen [-CH(CH₃)-CH₂-O- und/oder (-CH₂-CH(CH₃)-O-)] pro Molekül enthält, der über ein O- oder N-Atom mit der aromatischen oder heteroaromatischen Verbindung verknüpft ist. Ein solcher Rest kann eine einheitliche Verbindung sein, wird aber zweckmäßig eine Mischung aus Komponenten sein, deren Anzahl an Oxyalkylengruppen aus zwei oder drei Kohlenstoffatomen (d.h. Oxyethylen und/oder Oxypropylen) unterschiedlich ist, wobei die chemische Struktur der Einheit am Ende der Oxyalkylen-Gruppen im allgemeinen gleich ist und in manchen Fällen auch eine Mischung aus chemisch unterschiedlichen aromatischen Verbindungen zum Einsatz kommen kann. Die durchschnittliche Anzahl an Oxyalkylen-Gruppen bestehend aus zwei oder drei Kohlenstoffatomen pro Molekül, die in den Komponenten, die eine solche Mischung ergeben, enthalten sind, ist 1 bis 300, bevorzugt 2 bis 280 und besonders bevorzugt 10 bis 200.

Gemäß einer bevorzugten Ausführungsform werden als aromatische oder heteroaromatische Verbindungen A) Phenol-, Naphthol-, Anilin- oder Furfurylalkohol-Derivate eingesetzt. Es ist im Rahmen der vorliegenden Erfindung möglich, dass die Komponente A) Substituenten ausgewählt aus der Gruppe OH, OR¹, NH₂, NHR¹, NR¹₂, C₁-C₁₀-Alkyl, SO₃H, COOH, PO₃H₂, OPO₃H₂ aufweist, wobei die C₁-C₁₀-Alkylreste wiederum Phenyl- oder 4-Hydroxyphenyl-Reste besitzen können und R¹ einen C₁-C₄ Alkylrest bedeutet. Konkrete Beispiele für die Komponente A) sind die Addukte von Phenol, Cresol, Resorcinol, Nonylphenol, Methoxyphenol, Naphthol, Methylnaphthol, Butylnaphthol, Bisphenol A, Anilin, Methylanilin, Hydroxyanilin, Methoxyanilin, Furfurylalkohol und Salicylsäure mit 1 bis 300 mol eines Oxyethylen- und/oder Oxypropylen-Restes. Unter dem Gesichtspunkt einer leicht zu erfolgenden Kondensation mit Formaldehyd ist die Komponente A) bevorzugt ein Addukt eines Benzol-Derivates, z.B. Phenol, welches eine C₁-C₁₀-Alkylgruppe aufweisen kann, besonders bevorzugt von Phenol, mit einem Alkylenoxid. Die aromatische Ausgangskomponente für A) kann in einigen Fällen bereits eine oder mehrere Oxyalkylengruppen mit zwei oder drei Kohlenstoffatomen enthalten, wobei in einem solchen Fall die Summe der Oxyalkylengruppen, sowohl der Ausgangssubstanz als auch der durch eine Additionsreaktion hinzugefügten Oxyalkylengruppen von 1 bis 300 pro Molekül reicht.

Substanzen, mit denen eine Poly(oxyalkylen)gruppe in die aromatische Ausgangskomponente für A) eingeführt werden kann, sind Ethylenoxid und Propylenoxid. Die Addition kann entweder in statistischer Reihenfolge oder in Form einer Blockstruktur erfolgen. Die terminale Einheit der Poly (oxyalkylen)gruppe von Komponente A) ist dabei nicht beschränkt auf eine Hydroxylgruppe; sie kann vielmehr auch aus einem Alkylether oder einem Carboxylsäureester bestehen, solange diese Gruppe die Kondensation mit Formaldehyd oder der Aldehyd-Säure Komponente nicht behindert.

Die Komponente B) ist eine aromatische Verbindung ausgewählt aus der Gruppe Phenole, Phenolether, Naphthole, Naphtholether; Aniline, Furfurylalkohole und/oder eines Aminoplastbildners ausgewählt aus der Gruppe Melamin(-Derivate), Harnstoff(-Derivate) und Carbonsäureamide. Gemäß einer bevorzugten Ausführungsform weist die aromatische Verbindung B) Substituenten ausgewählt aus der Gruppe OH, NH₂, OR², NHR², NR²R², COOH, C₁-C₄-Alkyl, SO₃H, PO₃H₂, OPO₃H₂ auf, wobei die Alkylreste wiederum Phenyl- oder 4-Hydroxyphenylreste besitzen können und R² einen C₁-C₄-Alkylrest oder einen (Poly-)oxy-C₂-C₃-alkylen-Rest (mit 1 bis 300 Ethylenoxid und/oder Propylenoxid-Einheiten) bedeutet, der seinerseits einen Substituenten ausgewählt aus der Gruppe OH, COOH, SO₃H, PO₃H₂, OPO₃H₂ aufweisen kann. Beispiele hierfür sind Phenol, Phenoxyessigsäure, Phenoxyethanol, Phenoxyethanolphosphat, Phenoxydiglycol, Phenoxydiglycolphosphat, Methoxyphenol, Resorcinol, Kresol, Bisphenol A, Nonylphenol, Anilin, Methylanilin, N-Phenyldiethanolamin, N-Phenyl-N,N-dipropansäure, N-Phenyl-N,N-diessigsäure, N-Phenyldiethanolamindiphosphat, Phenolsulfonsäure, Anthranilsäure, Bernsteinsäuremonoamid, Furfuryalkohol, Melamin sowie Harnstoff.

Die dritte Komponente C) stellt eine Aldehydverbindung ausgewählt aus der Gruppe Formaldehyd, Glyoxylsäure und Benzaldehyd oder Mischungen davon dar, wobei der Benzaldehyd noch Säuregruppen der Formeln COOMₐ, SO₃Mₐ und PO₃Mₐ aufweisen kann und M = H, Alkali- oder Erdalkalimetall, Ammonium oder organische Aminreste sowie a = ½, 1 oder 2 bedeuten können. Allgemein wird Formaldehyd in Kombination mit einem weiteren Aldehyd, welcher Säuregruppen oder deren, entsprechenden Salze enthält, verwendet. Es ist auch möglich, die Polykondensation ohne die Anwesenheit von Formaldehyd durchzuführen. Die Anwesenheit von Säuregruppen in mindestens einer der Aldehydkomponenten ist bevorzugt für den Einsatz der erhaltenen Polymere als Fließmittel, da auf diese Weise eine für eine verflüssigende Wirkung notwendige Adsorption der Polymere auf der Zementkornoberfläche erreicht werden kann. Falls jedoch die Säuregruppe durch eine geeignete Komponente B) eingeführt wird, kann auch auf die Verwendung von Säuregruppen-haltigen Aldehyden verzichtet werden. Bevorzugte Aldehyd-Säure Derivate beinhalten Aldehyd-Carbonsäuren, -Sulfonsäuren und -Phosphonsäuren. Besonders bevorzugt finden Formaldehyd, Glyoxylsäure, Benzaldehydsulfonsäure oder Benzaldehyddisulphonsäure Verwendung. Als mono- oder divalente Salze dieser Aldehyd-Säure Derivate kommen bevorzugt die Alkalimetallsalze, z.B. Natrium- oder Kaliumsalze, Erdalkalisalze, z.B. Kalziumsalze, sowie Ammoniumsalze oder Salze organischer Amine zum Einsatz. Gemäß einer bevorzugten Ausführungsform beträgt das Verhältnis von Formaldehyd zur Aldehyd-Säurekomponente 1 : 0,1 - 100, insbesondere 1 : 0,5 - 50 und besonders bevorzugt 1 : 0,5 - 20.

Die Aldehydkomponenten werden bevorzugt in Form ihrer wässrigen Lösungen eingesetzt, was die Dosierung bzw. Mischung der Komponenten in einer technisch durchgeführten Synthese erheblich vereinfacht; es ist aber auch der Einsatz der kristallinen, bzw. pulverförmigen Reinsubstanzen, bzw. deren Hydrate möglich.

Das Molverhältnis der Komponenten A), B) und C) kann in weiten Grenzen variiert werden, doch hat es sich als besonders vorteilhaft erwiesen, dass das Molverhältnis von Komponente C) : A) + ggf. B) auf 1 : 0,01 bis 10, insbesondere 1 : 0,1 bis 8 und das Molverhältnis der Komponente A) : B) auf 10 : 1 bis 1 : 10 eingestellt wird.

Die entsprechenden Kondensationsprodukte und deren Herstellung in wässriger Lösung sind in der deutschen Patentanmeldung DE 10 2004 050 395.8 beschrieben.

Es ist als erfindungswesentlich anzusehen, dass die verwendeten feinteiligen mineralischen Trägermaterialien eine spezifische Oberfläche von 0,5 bis 500 m²/g (ermittelt nach BET gemäß DIN 66 131) aufweisen. Die Gewichtsanteile an Trägermaterialien in den pulverförmigen Polykondensationsprodukten hängen vom Typ, der Zusammensetzung und der Einarbeitungsform des Polykondensationsproduktes sowie von der spezifischen Oberfläche und dem Adsorptionsvermögen des mineralischen Trägermaterials ab. Sie können daher in einem sehr breiten Bereich von 5 bis 95 Gew.-% schwanken.

Der Typ dieser Trägermaterialien unterliegt keiner besonderen Beschränkung. Wesentlich ist, dass sich das Material gut mit dem Polykondensationsprodukt verträgt, die Wirkung dieser Komponente nicht negativ beeinflusst und bereits in geringen Mengen pulverförmige verklebungs- und verbackungsresistente Polymerzusammensetzungen ergibt.

Vorzugsweise eingesetzt werden können Kreide, Kieselsäure, Calcit, Aluminiumoxid, Dolomit, Quarzmehl, Bentonit, Bimsmehl, Titandioxid, Flugasche, Zement (Portlandzement, Hochofenzement, etc.) Aluminiumsilikat, Talkum, Anhydrit, Kalk, Glimmer, Kieselgur, Gips, Magnesit, Tonerde, Kaolin, Schiefer- und Gesteinsmehl, Bariumsulfat sowie Gemische aus diesen Materialien. Gemäß einer bevorzugten Ausführungsform umfaßt das mineralische Trägermaterial bereits eine oder mehrere mineralische Komponenten eines Baustoffs.

Die feinteiligen Trägermaterialien besitzen eine bevorzugte Teilchengröße von 0,1 bis 1000 µm.

Gegebenenfalls können die mineralischen Trägermaterialien in Kombination mit organischen (nicht-mineralischen) Zusätzen wie Cellulosepulvern bzw. -fasern sowie Pulvern bzw. Fasern organischer Polymere (Polyacrylnitril, Polystyrol, etc.) verwendet werden.

Gegenstand der Erfindung ist auch ein Verfahren zur Herstellung der pulverförmigen Kondensationsprodukte, wobei man die Polykondensationsprodukte in Form einer Schmelze mit einem Gesamtwassergehalt von < 10 Gew.-% mit dem Trägermaterial vermischt.

Von besonderem Interesse ist weiterhin die Mischtechnik bei der Einarbeitung, die sich sehr stark am Typ des verwendeten Trägermaterials orientiert.

Trägermaterialien mit einer ausgeprägten porösen Struktur, wie z. B. Kieselsäuren, weisen ein besonders hohes Adsorptionsvermögen auf.

Mischer, an deren Mischwerkzeugen hohe Scherkräfte wirksam werden, können die poröse Struktur zerstören, wodurch die in den Hohlräumen festgehaltenen Kondensationsprodukte wieder herausgepresst werden. Es empfiehlt sich daher, für diesen Trägertyp Mischapparate mit geringen Scherkräften, wie Trommelmischer, V-Mischer, Taumelmischer oder andere Vertreter aus der Gruppe der Freifallmischer zu verwenden.

Darüber hinaus sind für poröse Träger Konusmischer, Pflugscharmischer oder Spiralmischer mit vertikal oder horizontal angeordneten Mischwerkzeugen geeignet. Für mineralische Träger, deren Struktur durch den Mischprozess nicht gestört werden kann, sind auch alle anderen Apparatetypen nutzbar, wie Dissolver, Schneckenmischer, Doppelschneckenmischer, Air-Mix-Mischer und andere.

Ein weiterer Gegenstand der vorliegenden Erfindung ist die Verwendung der pulverförmigen Kondensationsprodukte in Baustoffen, wobei als Baustoffe Bitumenprodukte, auf hydraulisch abbindenden Bindemitteln wie Zement bzw. latent hydraulischen Bindemitteln basierende Baustoffe, Gips-, Anhydrit- oder sonstige Calciumsulfat-basierende Baustoffe, keramische Massen, Feuerfestmassen, Ölfeldbaustoffe und dispersionsbasierende Baustoffe eingesetzt werden.

Die Einarbeitung der pulverförmigen Polykondensationsprodukte in den Baustoff erfolgt in der Regel zusammen mit anderen Füllstoffen und Baustoffadditiven wie Dispersionspulvem, Wasserretentionsmitteln, Verdickem, Verzögerern, Beschleunigern, Netzmitteln u. a. Der Anteil an pulverförmigen Polykondensationsprodukten liegt üblicherweise bei 0,1 bis 5 Gew.-% bezogen auf das Gewicht des Baustoffs. Die erfindungsgemäßen pulverförmigen Polykondensationsprodukte weisen eine Reihe von Vorteilen auf wie zum Beispiel große Lagerstabilität, gute Verflüssigungswirkung bei geringer Dosierung sowie technisch einfache Herstellung, wie die nachfolgenden Beispiele belegen.

### Beispiele

### A. Herstellung der pulverförmigen Polykondensationsprodukte

### Beispiel A-1

1 mol Poly(ethylenoxid)-monophenylether (2000 g/mol), 1 mol Phenoxyethanolphosphat (bzw. eine Mischung aus 2-Phenoxyethanoldihydrogenphosphat und 2-Phenoxyethanol-hydrogenphosphat), 0,6 mol Wasser und 2 mol konz. H₂SO₄ werden unter Rühren vorgelegt. Zu der so entstandenen Lösung werden 2 mol Formaldehyd in Form einer 37 %-igen wässrigen Lösung zugetropft. Die Polykondensationsreaktion wird bei 105° C über einen Zeitraum von 5 h vervollständigt. Nach Beendigung der Reaktion wird zu der flüssigen Polymerschmelze ohne vorherige Neutralisation bei ca. 80°C basisches Aluminiumoxid (Teilchengröße 0,05-0,15mm) langsam eingerührt, bis ein lockeres Pulver entsteht. Die Menge Aluminiumoxid wird so gewählt, dass der Anteil Polykondensationsprodukt auf dem Träger 10 Gew.-% beträgt.

### Beispiel A-2

1 mol Poly(ethylenoxid)-monophenylether (2000 g/mol), 1 mol Phenoxyethanolphosphat (bzw. eine Mischung aus 2-Phenoxyethanoldihydrogenphosphat und 2-Phenoxyethanol-hydrogenphosphat), 0,6 mol Wasser und 2 mol konz. H₂SO₄ werden unter Rühren vorgelegt. Zu der so entstandenen Lösung werden 2 mol Formaldehyd in Form einer 37 %-igen wässrigen Lösung zugetropft. Die Polykondensationsreaktion wird bei 105 ° C über einen Zeitraum von 5 h vervollständigt. Nach Beendigung der Reaktion wird zu der flüssigen Polymerschmelze ohne vorherige Neutralisation bei ca. 80°C basisches Aluminiumoxid (Teilchengröße 0,05-0,15mm) langsam eingerührt, bis ein lockeres Pulver entsteht. Die menge Aluminiumoxid wird so gewählt, dass der Anteil Polykondensationsprodukt auf dem Träger 20 Gew.-% beträgt.

### Beispiel A-3

1 mol Poly(ethylenoxid)-monophenylether (2000 g/mol), 1 mol Phenoxyethanolphosphat (bzw. eine Mischung aus 2-Phenoxyethanoldihydrogenphosphat und 2-Phenoxyethanol-hydrogenphosphat), 0,6 mol Wasser und 2 mol konz. H₂SO₄ werden unter Rühren vorgelegt. Zu der so entstandenen Lösung werden 2 mol Formaldehyd in Form einer 37 %-igen wässrigen Lösung zugetropft. Die Polykondensationsreaktion wird bei 105° C über einen Zeitraum von 5 h vervollständigt. Nach Beendigung der Reaktion wird zu der flüssigen Polymerschmelze ohne vorherige Neutralisation bei ca. 80°C Sipernat 360® (gefällte Kieselsäure, mittlerer Teilchendurchmesser 15µm, spezifische Oberfläche 50 m²/g) langsam eingerührt, bis ein lockeres Pulver entsteht. Die Menge Sipernat 360® wird so gewählt, dass der Anteil Polykondensationsprodukt auf dem Träger 30 Gew.-% beträgt.

### Beispiel A-4

1 mol Poly(ethylenoxid)-monophenylether (2000 g/mol), 1 mol Phenoxyethanolphosphat (bzw. eine Mischung aus 2-Phenoxyethanoldihydrogenphosphat und 2-Phenoxyethanol-hydrogenphosphat), 0,6 mol Wasser und 2 mol konz. H₂SO₄ werden unter Rühren vorgelegt. Zu der so entstandenen Lösung werden 2 mol Formaldehyd in Form einer 37 %-igen wässrigen Lösung zugetropft. Die Polykondensationsreaktion wird bei 105° C über einen Zeitraum von 5 h vervollständigt. Nach Beendigung der Reaktion wird zu der flüssigen Polymerschmelze ohne vorherige Neutralisation bei ca. 80°C Sipernat 360® (gefällte Kieselsäure, mittlerer Teilchendurchmesser 15µm, spezifische Oberfläche 50 m²/g) langsam eingerührt, bis ein lockeres Pulver entsteht. Die Menge Sipernat 360^{®} wird so gewählt, dass der Anteil Polykondensationsprodukt auf dem Träger 60 Gew.-% beträgt.

### B. Mörteltests zur Bestimmung des Wasserreduktionsvermögens und Erhaltung der Fließfähigkeit über einen Zeitraum von 60 min

Durchführung der Tests erfolgte gemäß DIN EN 1015-3
Zement: CEM I 42,5 R Karlstadt

**Tabelle 1:**

| Rilem Mischer; Zement: Karlstadt; S/Z = 2,2; Normsand = 70 %; Quarzsand = 30% | | | | Ausbreitmaß Mörtel | | |
|---|---|---|---|---|---|---|
| Beispiel | Fließmittel | W/Z | Dos. [%] | 0 min [cm] | 30 min [cm] | 60 min [cm] |
| A-0 | ohne | 0,55 | - | 24,7 | 23,9 | - |
| A-1 | 10% PK / 90% Al₂O₃ | 0,47 | 0,2 | 24,6 | 25,6 | 24,6 |
| A-2 | 20% PK / 80% Al₂O₃ | 0,47 | 0,2 | 24,1 | 24,8 | 24,5 |
| A-3 | 30% PK / 70% Sip | 0,47 | 0,2 | 24,9 | 25,1 | 25,3 |
| A-4 | 60% PK / 40% Sip | 0,47 | 0,2 | 24,5 | 24,8 | 24,2 |

| | | | | | | |
|---|---|---|---|---|---|---|
| Ergebnisse der Mörtelausbreitversuche; PK = Polykondensationsprodukt; Sip = Sipernat 360^{®}; Dosierungen bezeichnen die Menge Fließmittel bezogen auf das Zementgewicht. | | | | | | |

Aus den in Tabelle 1 gezeigten Ergebnissen ist eindeutig ersichtlich, dass die auf verschiedene anorganische Trägermaterialien aufgebrachten Polykondensationsprodukte sehr gut als Wasserreduzierer in Mörtel wirken. Im Vergleich zu einer Mörtelmischung ohne Fließmittel ist der Wasserbedarf zur Erreichung der gleichen Verarbeitbarkeit im Fall der auf anorganische Trägermaterialien aufgebrachten Polykondensationsprodukte deutlich geringer. Außerdem wird die Verarbeitbarkeit der Mörtelmischung im Fall der auf anorganische Trägermaterialien aufgebrachten Polykondensationsprodukte über einen deutlich längeren Zeitraum aufrechterhalten als im Fall der fließmitteffreien Mörtelmischung. Des Weiteren scheint die Art des verwendeten Trägermaterials keinen Einfluss auf die Wirksamkeit der Produkte zu haben. Die verflüssigende Wirkung ist im Fall des hochporösen Sipernat 360^{®} vergleichbar mit der Wirkung von Fließmittel, das auf deutlich weniger poröses Al₂O₃ aufgebracht wurde.

### C. Betontests zur Bestimmung des Wasserreduktionsvermögens und Erhaltung der Fließfähigkeit über einen Zeitraum von 60 min

Die Durchführung der Tests erfolgte gemäß DIN EN 206-1, DIN EN 12350-2 und DIN EN 12350-5.

Zement: 320kg CEM I 52,5 R Bernburger, Temperatur 20 °C. Die Ergebnisse sind in Tabelle 2 zusammengefasst.

**Tabelle 2:**

| Beispiel | Fließmittel | W/Z | Dos. [%] | 0 min [cm] | 10 min [cm] | 40 min [cm] | 60 min [cm] |
|---|---|---|---|---|---|---|---|
| A-0 | ohne | 0,48 | - | 18 | 17 | 9 | 7 |
| A-1 | 10% PK / 90% Al₂O₃ | 0,42 | 0,24 | 19 | 19,5 | 14 | 7 |
| A-2 | 20% PK / 80% Al₂O₃ | 0,42 | 0,24 | 19,5 | 19,5 | 16 | 7 |
| A-3 | 30% PK / 70% Sip | 0,42 | 0,26 | 21,5 | 22 | 18 | 13 |
| A-4 | 60% PK / 40% Sip | 0,42 | 0,26 | 22,5 | 22,5 | 18 | 15 |

| | | | | | | | |
|---|---|---|---|---|---|---|---|
| Ergebnisse der Betontests; PK = Polykondensationsprodukt; Sip = Sipernat 360®; Dosierungen bezeichnen die Menge Fließmittel bezogen auf das Zementgewicht. | | | | | | | |

Bei dieser Testserie wurde das Wasser-Zementverhältnis so gewählt, dass für alle Proben nach Beendigung des Mischvorgangs ein einheitlicher Slump-Wert von ca. 20 cm erreicht wurde. Auch hier ist eindeutig die sehr gute verflüssigende Wirkung der erfindungsgemäßen Produkte ersichtlich. Auch in Beton wird die Verarbeitbarkeit über einen deutlich längeren Zeitraum aufrechterhalten, als im Fall der Mischung ohne Zusatzmittel.

## Patentansprüche

1. Pulverförmiges Polykondensationsprodukt, umfassend
a) 5 bis 95 Gew.-% eines Polykondensationsproduktes bestehend aus
(i) einer aromatischen oder heteroaromatischen Verbindung (A) mit 5 bis 10 C-Atomen bzw. Heteroatomen mit mindestens einem Oxyethylen- oder Oxypropylen-Rest,
(ii) einer aromatischen Verbindung (B) ausgewählt aus der Gruppe Phenole, Phenolether, Naphthole, Naphtholether, Aniline, Furfurylalkohole und/oder eines Aminoplastbildners ausgewählt aus der Gruppe Melamin(-Derivate), Harnstoff(-Derivate) und Carbonsäureamide, wobei die aromatische Verbindung (B) Substituenten ausgewählt aus der Gruppe NH₂, OR², NHR², NR²R², C₁-C₄-Alkyl, PO₃H₂, OPO₃H₂ aufweist, wobei die Alkylreste wiederum Phenyl- oder 4-Hydroxyphenyl-Reste besitzen können und R² einen C₁-C₄-Alkylrest oder einen (Poly)oxy-C₂-C₃-alkylen-Rest bedeutet, der seinerseits einen Substituenten ausgewählt aus der Gruppe OH, COOH, SO₃H, PO₃H₂, OPO₃H₂ aufweisen kann, und
(iii) einem Aldehyd (C) ausgewählt aus der Gruppe Formaldehyd, Glyoxylsäure und Benzaldehyd oder Mischungen davon, wobei der Benzaldehyd noch Säuregruppen der Formeln COOMₐ, SO₃Mₐ und PO₃Mₐ aufweisen kann und M = H, Alkali- oder Erdalkalimetall, Ammonium oder organische Aminreste sowie a = ½, 1 oder 2 bedeuten können, sowie
b) 5 bis 95 Gew.-% eines feinteiligen mineralischen Trägermaterials mit einer spezifischen Oberfläche von 0,5 bis 500 m²/g (nach BET gemäß DIN 66 131).

2. Pulverförmiges Polykondensationsprodukt, bestehend aus
a) 5 bis 95 Gew.-% eines Polykondensationsproduktes bestehend aus
(i) einer aromatischen oder heteroaromatischen Verbindung (A) mit 5 bis 10 C-Atomen bzw. Heteroatomen mit mindestens einem Oxyethylen- oder Oxypropylen-Rest,
(ii) einem Aldehyd (C) ausgewählt aus der Gruppe Glyoxylsäure und Benzaldehyd oder Mischungen davon, wobei der Benzaldehyd noch Säuregruppen der Formeln COOMₐ, SO₃Mₐ und PO₃Mₐ aufweist und M = H, Alkali- oder Erdalkalimetall, Ammonium oder organische Aminreste sowie a = ½, 1 oder 2 bedeuten können, und
(iii) gegebenenfalls einer aromatischen Verbindung (B) ausgewählt aus der Gruppe Phenole, Phenolether, Naphthole, Naphtholether, Aniline, Furfurylalkohole und/oder eines Aminoplastbildners ausgewählt aus der Gruppe Melamin(-Derivate), Harnstoff(-Derivate) und Carbonsäureamide, sowie
b) 5 bis 95 Gew.-% eines feinteiligen mineralischen Trägermaterials mit einer spezifischen Oberfläche von 0,5 bis 500 m²/g (nach BET gemäß DIN 66 131).

3. Polykondensationsprodukt nach Anspruch 1 oder 2,
**dadurch gekennzeichnet,**
**dass** die aromatische oder heteroaromatische Verbindung (A) im Durchschnitt 1 bis 300 mol pro Molekül eines Oxyethylen- und/oder Oxypropylen-Restes aufweist, der über ein O- oder N-Atom mit der aromatischen oder heteroaromatischen Verbindung (A) verknüpft ist und noch weitere Substituenten, ausgewählt aus der Gruppe OH, OR¹, NH₂, NHR¹, NR¹₂, C₁-C₁₀-Alkyl, SO₃H, COOH, PO₃H₂, OPO₃H₂ aufweisen kann, wobei die C₁-C₁₀-Alkylreste Phenyl- oder 4-Hydroxyphenyl-Reste besitzen können und R¹ einen C₁-C₄-Rest darstellt.

4. Polykondensationsprodukt nach einem der Ansprüche 1 bis 3,
**dadurch gekennzeichnet,**
**dass** sich die Komponente (A) ableitet von einer Verbindung ausgewählt aus der Gruppe Phenol, Cresol, Resorcinol, Nonylphenol, Methoxyphenol, Naphthol, Methylnaphthol, Butylnaphthol, Bisphenol A, Anilin, Methylanilin, Hydroxyanilin, Methoxyanilin, Furfurylalkohol und Salicylsäure.

5. Polykondensationsprodukt nach einem der Ansprüche 2 bis 4,
**dadurch gekennzeichnet,**
**dass** die aromatische Verbindung (B) Substituenten ausgewählt aus der Gruppe OH, NH₂, OR², NHR², NR²R², COOH, C₁-C₄-Alkyl, SO₃H, PO₃H₂, OPO₃H₂, aufweist, wobei die Alkylreste wiederum Phenyl- oder 4-Hydroxyphenyl-Reste besitzen können und R² einen C₁-C₄-Alkylrest oder einen (Poly)oxy-C₂-C₃-alkylen-Rest bedeutet, der seinerseits einen Substituenten ausgewählt aus der Gruppe OH, COOH, SO₃H, PO₃H₂, OPO₃H₂ aufweisen kann.

6. Polykondensationsprodukt nach einem der Ansprüche 1 bis 5,
**dadurch gekennzeichnet,**
**dass** die Komponente (B) eine Verbindung ausgewählt aus der Gruppe Phenoxyessigsäure, Phenoxyethanol, Phenoxyethanolphosphat, Phenoxydiglycol, Phenoxydiglycolphosphat, Methoxyphenol, Kresol, Bisphenol A, Anilin, Methylanilin, N-Phenyldiethanolamin, N-Phenyl-N,N-dipropansäure, N-Phenyl-N,N-diessigsäure, N-Phenyldiethanolamindiphosphat, Anthranilsäure, Bernsteinsäuremonoamid, Melamin, Harnstoff darstellt.

7. Polykondensationsprodukt nach einem der Ansprüche 1 und 3 bis 6,
**dadurch gekennzeichnet,**
**dass** die Aldehyd-Komponente (C) eine Verbindung ausgewählt aus der Gruppe Formaldehyd, Glyoxylsäure, Benzaldehyd, Benzaldehydsulfonsäure sowie Benzaldehyddisulfonsäure darstellt.

8. Polykondensationsprodukt nach einem der Ansprüche 1 bis 7,
**dadurch gekennzeichnet,**
**dass** das Molverhältnis von Komponente (C) : (A) + ggf. (B) 1 : 0,01 bis 10, insbesondere 1 : 0,1 bis 8, beträgt.

9. Polykondensationsprodukt nach einem der Ansprüche 1 bis 8,
**dadurch gekennzeichnet,**
**dass** das Molverhältnis der Komponenten (A): (B) 10 : 1 bis 1 : 10 beträgt.

10. Polykondensationsprodukt nach einem der Ansprüche 1 bis 9,
**dadurch gekennzeichnet,**
**dass** das Trägermaterial ausgewählt ist aus der Gruppe Kreide, Kieselsäure, Aluminiumoxid, Calcit, Dolomit, Quarzmehl, Bentonit, Bimsmehl, Titandioxid, Flugasche, Zement (Portlandzement, Hochofenzement), Aluminiumsilicat, Talkum, Anhydrit, Kalk, Glimmer, Kieselgur, Gips, Magnesit, Tonerde, Kaolin, Schiefer- und Gesteinsmehl, Bariumsulfat sowie Gemische aus diesen Materialen.

11. Verfahren zur Herstellung eines Polykondensationsprodukts nach einem der Ansprüche 1 bis 10,
**dadurch gekennzeichnet,**
**dass** die Polykondensationsprodukte in Form einer Schmelze mit einem Gesamtwassergehalt von < 10 Gew.-% mit dem Trägermaterial vermischt werden.

12. Verwendung eines Polykondensationsprodukts nach einem der Ansprüche 1 bis 10 in Baustoffen, insbesondere in Bitumenprodukten, auf hydraulisch abbindenden Bindemitteln wie Zement bzw. latent hydraulischen Bindemitteln basierenden Baustoffen, Gips- Anhydrit- oder sonstigen Calciumsulfat-basierenden Baustoffen, keramischen Massen, Feuerfestmassen, Ölfeldbaustoffen und dispersionsbasierenden Baustoffen, in einer Menge von 0,1 bis 5 Gew.-% an Polykondensationsprodukten, bezogen auf das Gewicht des Baustoffs.

## Claims

1. Pulverulent polycondensation product comprising
a) 5 to 95% by weight of a polycondensation product consisting of
(i) an aromatic or heteroaromatic compound (A) having 5 to 10 C atoms and/or heteroatoms with at least one oxyethylene or oxypropylene radical,
(ii) an aromatic compound (B) selected from the group consisting of phenols, phenol ethers, naphthols, naphthol ethers, anilines, furfuryl alcohols and/or of an aminoplast former selected from the group consisting of melamine (derivatives), urea (derivatives) and carboxylic acid amides, wherein the aromatic compound (B) contains substituents selected from the group consisting of NH₂, OR², NHR², NR²R², C₁-C₄-alkyl, PO₃H₂, OPO₃H₂, where the alkyl radicals can in turn have phenyl or 4-hydroxyphenyl radicals and R² is a C₁-C₄-alkyl radical or a (poly) oxy-C₂-C₃-alkylene radical, which for its part can contain a substituent selected from the group consisting of OH, COOH, SO₃H, PO₃H₂, OPO₃H₂, and
(iii) an aldehyde (C) selected from the group consisting of formaldehyde, glyoxylic acid and benzaldehyde or mixtures thereof, wherein the benzaldehyde can additionally contain acid groups of the formulae COOMₐ, SO₃Mₐ and PO₃Mₐ and M can be = H, alkali metal or alkaline earth metal, ammonium or organic amine radicals, and a can be = ½, 1 or 2, and
b) 5 to 95% by weight of a finely divided mineral carrier material having a specific surface area of 0.5 to 500 m²/g (according to BET as specified in DIN 66 131).

2. Pulverulent condensation product consisting of
a) 5 to 95% by weight of a polycondensation product consisting of
(i) an aromatic or heteroaromatic compound (A) having 5 to 10 C atoms and/or heteroatoms with at least one oxyethylene or oxypropylene radical,
(ii) an aldehyde (C) selected from the group consisting of glyoxylic acid and benzaldehyde or mixtures thereof, wherein the benzaldehyde additionally contains acid groups of the formulae COOMₐ, SO₃Mₐ and PO₃Mₐ and M can be = H, alkali metal or alkaline earth metal, ammonium or organic amine radicals, and a can be = ½, 1 or 2, and
(iii) optionally an aromatic compound (B) selected from the group consisting of phenols, phenol ethers, naphthols, naphthol ethers, anilines, furfuryl alcohols and/or of an aminoplast former selected from the group consisting of melamine (derivatives), urea (derivatives) and carboxylic acid amides, and
b) 5 to 95% by weight of a finely divided mineral carrier material having a specific surface area of 0.5 to 500 m²/g (according to BET as specified in DIN 66 131).

3. Polycondensation product according to Claim 1 or 2, **characterized in that** the aromatic or heteroaromatic compound (A) on average has 1 to 300 mol per molecule of an oxyethylene and/or oxypropylene radical, which is linked to the aromatic or heteroaromatic compound (A) via an O or N atom, and may additionally contain further substituents selected from the group consisting of OH, OR¹, NH₂, NHR¹, NR¹₂, C₁-C₁₀-alkyl, SO₃H, COOH, PO₃H₂, OPO₃H₂, where the C₁-C₁₀-alkyl radicals can have phenyl or 4-hydroxyphenyl radicals and R¹ is a C₁-C₄ radical.

4. Polycondensation product according to one of Claims 1 to 3, **characterized in that** component (A) is derived from a compound selected from the group consisting of phenol, cresol, resorcinol, nonylphenol, methoxyphenol, naphthol, methylnaphthol, butylnaphthol, bisphenol A, aniline, methylaniline, hydroxyaniline, methoxyaniline, furfuryl alcohol and salicylic acid.

5. Polycondensation product according to one of Claims 2 to 4, **characterized in that** the aromatic compound (B) contains substituents selected from the group consisting of OH, NH₂, OR², NHR² NR²R², COOH, C₁-C₄-alkyl, SO₃H, PO₃H₂, OPO₃H₂, where the alkyl radicals can in turn have phenyl or 4-hydroxyphenyl radicals and R² is a C₁-C₄-alkyl radical or a (poly) oxy-C₂-C₃-alkylene radical, which for its part can contain a substituent selected from the group consisting of OH, COOH, SO₃H, PO₃H₂, OPO₃H₂.

6. Polycondensation product according to one of Claims 1 to 5, **characterized in that** component (B) is a compound selected from the group consisting of phenoxyacetic acid, phenoxyethanol, phenoxyethanol phosphate, phenoxydiglycol, phenoxydiglycol phosphate, methoxyphenol, cresol, bisphenol A, aniline, methylaniline, N-phenyldiethanolamine, N-phenyl-N,N-dipropanoic acid, N-phenyl-N,N-diacetic acid, N-phenyldiethanolamine diphosphate, anthranilic acid, succinic acid monoamide, melamine, urea.

7. Polycondensation product according to one of Claims 1 and 3 to 6, **characterized in that** the aldehyde component (C) is a compound selected from the group consisting of formaldehyde, glyoxylic acid, benzaldehyde, benzaldehydesulphonic acid and benzaldehydedisulphonic acid.

8. Polycondensation product according to one of Claims 1 to 7, **characterized in that** the molar ratio of component (C):(A) + optionally (B) is 1:0.01 to 10, in particular 1:0.1 to 8.

9. Polycondensation product according to one of Claims 1 to 8, **characterized in that** the molar ratio of the components (A):(B) is 10:1 to 1:10.

10. Polycondensation product according to one of Claims 1 to 9, **characterized in that** the carrier material is selected from the group consisting of chalk, silicic acid, aluminium oxide, calcite, dolomite, quartz powder, bentonite, pumice flour, titanium dioxide, fly ash, cement (Portland cement, blast-furnace cement), aluminium silicate, talc, anhydrite, lime, mica, kieselguhr, gypsum, magnesite, argillaceous earth, kaolin, slate and rock flour, barium sulphate, and mixtures of these materials.

11. Process for the preparation of a polycondensation product according to one of Claims 1 to 10, **characterized in that** the polycondensation products are mixed with the carrier material in the form of a melt having a total water content of < 10% by weight.

12. Use of a polycondensation product according to one of Claims 1 to 10 in construction materials, in particular in bitumen products, construction materials based on hydraulically setting binders such as cement or latent hydraulic binders, gypsum-, anhydrite- or other calcium sulphate-based construction materials, ceramic compounds, refractory compounds, oilfield construction materials and dispersion-based construction materials, in an amount of from 0.1 to 5% by weight of polycondensation products based on the weight of the construction material.

## Revendications

1. Produit de polycondensation sous forme de poudre, comprenant
a) 5 à 95% en poids d'un produit de polycondensation, constitué par
(i) un composé aromatique ou hétéroaromatique (A) comprenant 5 à 10 atomes de carbone ou, selon le cas hétéroatomes présentant au moins un radical oxyéthylène ou oxypropylène,
(ii) un composé aromatique (B) choisi dans le groupe des phénols, des phénoléthers, des naphtols, des naphtoléthers, des anilines, des alcools furfuryliques et/ou d'un agent de formation d'aminoplastes choisi dans le groupe de la mélamine (ou ses dérivés), de l'urée (ou ses dérivés) et des amides d'acide carboxylique, le composé aromatique (B) présentant des substituants choisis dans le groupe NH₂, OR², NHR², NR²R², C₁-C₄-alkyle, PO₃H₂, OPO₃H₂, les radicaux alkyle pouvant à nouveau présenter des radicaux phényle ou 4-hydroxyphényle et R² signifiant un radical C₁-C₄-alkyle ou un radical (poly)oxy-C₂-C₃-alkylène, qui peut à son tour présenter un substituant du groupe OH, COOH, SO₃H, PO₃H₂, OPO₃H₂, et
(iii) un aldéhyde (C) choisi dans le groupe formé par le for maldéhyde, l'acide glyoxylique et le benzaldéhyde ou leurs mélanges, le benzaldéhyde pouvant encore présenter des groupes acides des formules COOMₐ, SO₃Mₐ et PO₃Mₐ et M = H, un métal alcalin ou alcalino-terreux, ammonium ou des radicaux amine organiques et a = 1/2, 1 ou 2,
et
b) 5 à 95% en poids d'un matériau support minéral finement divisé présentant une surface spécifique de 0,5 à 500 m²/g (selon BET selon la norme DIN 66 131).

2. Produit de polycondensation sous forme de poudre, constitué par
a) 5 à 95% en poids d'un produit de polycondensation, constitué par
(i) un composé aromatique ou hétéroaromatique (A) comprenant 5 à 10 atomes de carbone ou, selon le cas hétéroatomes présentant au moins un radical oxyéthylène ou oxypropylène,
(ii) un aldéhyde (C) choisi dans le groupe formé par l'acide glyoxylique et le benzaldéhyde ou leurs mélanges, le benzaldéhyde présentant encore des groupes acides des formules COOMₐ, SO₃Mₐ et PO₃Mₐ et M = H, un métal alcalin ou alcalino-terreux, ammonium ou des radicaux amine organiques et a = 1/2, 1 ou 2, et
(iii) le cas échéant un composé aromatique (B) choisi dans le groupe des phénols, des phénoléthers, des naphtols, des naphtoléthers, des anilines, des alcools furfuryliques et/ou d'un agent de formation d'aminoplastes choisi dans le groupe de la mélamine (ou ses dérivés), de l'urée (ou ses dérivés) et des amides d'acide carboxylique, et
b) 5 à 95% en poids d'un matériau support minéral finement divisé présentant une surface spécifique de 0,5 à 500 m²/g (selon BET selon la norme DIN 66 131).

3. Produit de polycondensation selon la revendication 1 ou 2, **caractérisé en ce que** le composé aromatique ou hétéroaromatique (A) présente en moyenne 1 à 300 moles par molécule d'un radical oxyéthylène et/ou oxypropylène, qui est lié via un atome de O ou de N au composé aromatique ou hétéroaromatique (A) et peut encore présenter d'autres substituants choisis dans le groupe OH, OR¹, NH₂, NHR¹, NR¹₂, C₁-C₁₀-alkyle, SO₃H, COOH, PO₃H₂, OPO₃H₂, les radicaux C₁-C₁₀-alkyle pouvant présenter des radicaux phényle ou 4-hydroxphényle et R¹ représentant un radical en C₁-C₄.

4. Produit de polycondensation selon l'une quelconque des revendications 1 à 3, **caractérisé en ce que** le composant (A) est dérivé d'un composé choisi dans le groupe formé par le phénol, le crésol, le résorcinol, le nonylphénol, le méthoxyphénol, le naphtol, le méthylnaphtol, le butylnaphtol, le bisphénol A, l'aniline, la méthylaniline, l'hydroxyaniline, la méthoxyaniline, l'alcool furfurylique et l'acide salicylique.

5. Produit de polycondensation selon l'une quelconque des revendications 2 à 4, **caractérisé en ce que** le composé aromatique (B) présente des substituants choisis dans le groupe OH, NH₂, OR², NHR², NR²R², COOH, C₁-C₄-alkyle, SO₃H, PO₃H₂, OPO₃H₂, les radicaux alkyle pouvant à nouveau présenter des radicaux phényle ou 4-hydroxyphényle et R² signifiant un radical C₁-C₄-alkyle ou un radical (poly)oxy-C₂-C₃-alkylène, qui peut à son tour présenter un substituant choisi dans le groupe OH, COOH, SO₃H, PO₃H₂, OPO₃H₂.

6. Produit de polycondensation selon l'une quelconque des revendications 1 à 5, **caractérisé en ce que** le composant (B) représente un composé choisi dans le groupe formé par l'acide phénoxyacétique, le phénoxyéthanol, le phénoxyéthanolphosphate, le phénoxydiglycol, le phénoxydiglycolphosphate, le méthoxyphénol, le crésol, le bisphénol A, l'aniline, la méthylaniline, la N-phényldiéthanolamine, l'acide N-phényl-N,N-dipropanoïque, l'acide N-phényl-N,N-diacétique, le N-phényldiéthanolaminediphosphate, l'acide anthranilique, le monoamide de l'acide succinique, la mélamine, l'urée.

7. Produit de polycondensation selon l'une quelconque des revendications 1 et 3 à 6, **caractérisé en ce que** le composant aldéhyde (C) représente un composé choisi dans le groupe constitué par le formaldéhyde, l'acide glyoxylique, le benzaldéhyde, l'acide benzaldéhydesulfonique ainsi que l'acide benzaldéhydedisulfonique.

8. Produit de polycondensation selon l'une quelconque des revendications 1 à 7, **caractérisé en ce que** le rapport molaire des composants (C):(A) + le cas échéant (B) vaut 1:0,01 à 10, en particulier 1:0,1 à 8.

9. Produit de polycondensation selon l'une quelconque des revendications 1 à 8, **caractérisé en ce que** le rapport molaire des composants (A): (B) vaut 10:1 à 1:10.

10. Produit de polycondensation selon l'une quelconque des revendications 1 à 9, **caractérisé en ce que** le matériau support est choisi dans le groupe formé par la craie, la silice, l'oxyde d'aluminium, la calcite, la dolomite, la farine de quartz, la bentonite, la farine de ponce, le dioxyde de titane, les cendres volantes, le ciment (ciment Portland, ciment de haut fourneau), le silicate d'aluminium, le talc, l'anhydrite, la chaux, le mica, le kieselgur, le gypse, la magnésite, l'argile, le kaolin, la farine de schiste et la farine de roche, le sulfate de baryum ainsi que les mélanges de ces matériaux.

11. Procédé pour la préparation d'un produit de polycondensation selon l'une quelconque des revendications 1 à 10, **caractérisé en ce que** les produits de polycondensation sont mélangés sous forme d'une masse fondue présentant une teneur totale en eau < 10% en poids avec le matériau support.

12. Utilisation d'un produit de polycondensation selon l'une quelconque des revendications 1 à 10 dans des matériaux de construction, en particulier dans les produits à base de bitume, les matériaux de construction à base de liants à prise hydraulique tels que le ciment ou les liants hydrauliques latents, les matériaux de construction à base de gypse, d'anhydrite ou d'autres formes de sulfate de calcium, les masses céramiques, les masses ignifuges, les matériaux de construction pour champs pétroliers et les matériaux de construction à base de dispersions, en une quantité de 0,1 à 5% en poids de produits de polycondensation par rapport au poids du matériau de construction.
